# NEUE EUROPÄISCHE PATENTSCHRIFT

(11) **EP 1 129 140 B2**
(45) Veröffentlichungstag und Bekanntmachung des Hinweises auf die Entscheidung über den Einspruch: **29.07.2015**
(45) Hinweis auf die Patenterteilung: 24.07.2002
(21) Anmeldenummer: 99960964.7
(22) Anmeldetag: 09.11.1999
(51) Int. Cl.: C08L 97/00, C08L 67/04, C08L 1/12, C08L 1/14, C08L 3/02

(54) **KUNSTSTOFF-WERKSTOFF AUS EINEM POLYMER-BLEND**
PLASTIC MATERIAL MADE FROM A POLYMER BLEND
MATIERE PLASTIQUE CONSTITUEE D'UN MELANGE DE POLYMERES

(30) Priorität: 11.11.1998 DE 19852081
(43) Veröffentlichungstag der Anmeldung: 05.09.2001
(73) Patentinhaber: Fraunhofer-Gesellschaft zur Förderung der angewandten Forschung e.V., 80686 München (DE); Tecnaro Gesellschaft zur industriellen Anwendung nachwachsender Rohstoffe mbH, 74360 Ilsfeld (DE)
(72) Erfinder: NÄGELE, Helmut, D-76327 Pfinztal (DE); PFITZER, Jürgen, D-76327 Pfinztal (DE); EISENREICH, Norbert, D-76327 Pfinztal (DE); EYERER, Peter, D-76228 Karlsruhe (DE); ELSNER, Peter, D-76327 Pfinztal (DE); ECKL, Wilhelm, D-76133 Karlsruhe (DE)
(74) Vertreter: Lenz, Steffen
(86) Internationale Anmeldenummer: PCT/EP1999/008584
(87) Internationale Veröffentlichungsnummer: WO 2000/027923

(56) Entgegenhaltungen:
- EP-A- 0 934 976
- EP-A- 0 934 976
- WO-A-91/17199
- WO-A-91/17199
- WO-A-95/08594
- WO-A-95/08594
- WO-A1-98/13424
- DE-A- 19 729 268
- DE-A- 19 729 268
- T.G.RIALS ET AL.: "Multiphase materials with lignin. VI. Effect of cellulose derivative structure on blend morphology with lignin", WOOD AND FIBER SCIENCE, Bd. 21, Nr. 1, 1989, Seiten 80-90, XP000889708,
- T.G.RIALS ET AL.: "Multiphase materials with lignin. VI. Effect of cellulose derivative structure on blend morphology with lignin" WOOD AND FIBER SCIENCE, Bd. 21, Nr. 1, 1989, Seiten 80-90, XP000889708

## Beschreibung

Die Erfindung betrifft die Verwendung eines Kunststoff-Werkstoffs aus einem Polymer-Blend.

Der Einsatz von aus unterschiedlichen Polymeren bestehenden Blends, die in der Regel durch Mischen der entsprechenden Polymerschmelzen hergestellt werden, sind in der Kunststoffverarbeitung von großer Bedeutung. Durch die Kombination unterschiedlicher Polymere ist es insbesondere möglich, die für die bestimmungsgemäße Verwendung des Kunststoffs jeweils günstigen Eigenschaften der beiden Polymerkomponenten kombinatorisch zu nutzen oder die erwünschten Werkstoffeigenschaften einer Polymerkomponente hervorzuheben, während die unerwünschten Werkstoffeigenschaften dieser Komponente je nach Mischungsverhältnis bis zu einem gewissen Grad von der anderen Komponente überdeckt werden können. Hierdurch lassen sich Kunststoff-Werkstoffe bereitstellen, deren Eigenschaften gezielt auf den jeweiligen technischen Verwendungszweck eingestellt werden können.

Aus synthetischen Polymeren bestehende Kunststoffe werden vielfach zur Herstellung von kurzlebigen Wirtschaftsgütern eingesetzt. Das Recycling ist insbesondere aufgrund der schwierigen Trennung der verschiedenen Kunststoffe mit erheblichen Kosten verbunden. Hieraus und aus der Notwendigkeit der Schonung der begrenzten Mineralöl-Ressourcen, aus denen die Grundstoffe der Kunststoffsynthese gewonnen werden, ergibt sich der Wunsch nach einer Substition synthetischer durch natürliche Polymere. Dieser Wunsch wird noch dadurch verstärkt, daß bei der häufig einzig verbleibenden Möglichkeit der Abfallbeseitigung, nämlich der Verbrennung synthetischer Kunststoffe, erhebliche CO₂-Emissionen, häufig begleitet von toxischen Emissionen, entstehen. Demgegenüber zeichnen sich Polymere aus nachwachsenden natürlichen Rohstoffen durch eine ökologisch neutrale CO₂-Bilanz aus, da bei Verbrennung der natürlichen Polymere der Atmosphäre nicht mehr CO₂ zugeführt wird, als ihr beim Wachstum der Rohstoffe entzogen wurde. Des weiteren sind insbesondere biologisch abbaubare bzw. kompostierbare natürliche Polymere von vorrangigem Interesse, da diese im Vergleich mit den meisten synthetischen Polymeren in einem wesentlich kürzeren Zeitraum und in der Regel rückstandslos abgebaut werden.

Kunststoffe auf der Grundlage natürlicher Polymere bzw. durch Oxidation, Enzymbehandlung od. dgl. modifizierter natürlicher Polymere, wie Duroplaste aus Casein oder Thermoplaste aus Cellulosenitraten, acetaten, -estern und ethern, sind bereits bekannt. Nachteilig bei vielen bekannten natürlichen Kunststoffen ist einerseits deren Hygroskopizität, was durch den Zusatz von Weichmachern noch verstärkt wird. Andererseits werden zu ihrer Herstellung hohe Temperaturen von etwa 200°C benötigt, so daß ein vergleichsweise hoher Energiebedarf erforderlich ist. Darüber hinaus sind derartige Kunststoffe häufig nicht geruchsneutral und weisen schlechtere Werkstoffeigenschaften als synthetische Kunststoffe auf.

Ein natürliches Polymer mit im Vergleich zu anderen Naturpolymeren merklich besseren Werkstoffeigenschaften ist das Lignin, welches sich durch eine vergleichsweise hohe Festigkeit, Steifigkeit, Schlagzähigkeit sowie durch eine hohe Beständigkeit gegenüber UV-Strahlung auszeichnet.

Weiterhin ist Lignin ein geeignetes Dämmittel zur Wärme- und Schallisolierung. Lignin ist ein hochmolekulares polyphenolisches Makromolekül, das in verholzenden Pflanzen die Räume zwischen den Zellmembranen ausfüllt und zu Holz werden läßt, wobei ein Mischkörper aus druckfestem Lignin und zugfester Cellulose entsteht. Je nach Holzart können die Phenylgruppen des Lignins mit bis zu zwei Methoxygruppen und die Propylgruppen mit bis zu zwei Hydroxygruppen substituiert sein.

Lignin fällt in großen Mengen als Nebenprodukt bei der Zellstoffgewinnung an und ist somit in großen Mengen verfügbar. Hierbei entstehen beim Aufschluß des Holzes Ligninsulfonsäuren als Bestandteil der Sulfitablaugen, in denen die Ligninsulfonsäuren als Phenolate ("Alkali-Lignin") gelöst sind. Durch Behandlung mit Schwefelsäure und Kohlendioxid kann die Ligninsäure ausgefällt werden.

Insbesondere Alkali-Lignin aus der Zellstoffindustrie wird bereits als Bindemittel für Preßplatten auf Holz- und Cellulosebasis, als Dispergiermittel oder als Stabilisator von Asphaltemulsion verwendet.

Aus DE 197 00 902 A1, DE 197 00 903 A1, DE 197 00 905 A1, DE 197 00 907 A1 und DE 197 01 015 A1 ist ein Zwischenprodukt für die Herstellung von Polymerisaten aus Ligninderivaten, wie sie in der Zellstoffindustrie anfallen, bekannt, wobei die Ligninderivate mit phenoloxidierenden Enzymen in Gegenwart von Oxidationsmitteln, wie Sauerstoff, umgesetzt werden. Dieses Zwischenprodukt wird als Beschichtungsmittel für die Herstellung wasserfester Papiere und Pappen, als Beschichtungsmittel oder als Bindemittel zur Herstellung von Holzspanplatten, als Bindemittel für Stärke zur Herstellung wasserfester Stärkederivate, als Dämmaterial oder als eine Komponente eines mit pflanzlichen Fasern angereicherten Verbundwerkstoffs eingesetzt.

Der EP 0 720 634 B1 und WO 95/08594 A1 ist ein aus Alkali-Lignin und Proteinen bzw. Proteinderivaten hergestelltes verrott- und kompostierbares Naturstoffgranulat entnehmbar, welches aus einer stereochemischen Modifikation durch Behandlung mit organischen Säuren, insbesondere Essigsäure, hervorgeht und thermoplastisch zu Formteilen verarbeitbar ist.

Die WO 98/06785 beschreibt eine ähnliche Zusammensetzung, bei der Lignin und ein Protein erhitzt und miteinander verschmolzen werden. Dieser Werkstoff ist für die meisten Einsatzzwecke unbrauchbar, da Proteine auch in der verarbeiteten Form nicht geruchsneutral und zumeist feuchtigkeitsbindend sind.

Aus "Multiphase materials with lignin" (T.G. Rials als et al., Wood and Fiber Science, Band 21, Nr. 1, Seite 80 bis 90, 1989) ist ein Polymer-Blend aus Lignin und Ethylcellulose, Celluloseacetat bzw. Cellulosebutyrat bekannt. Der Aufsatz untersucht insbesondere das Phänomen einer gegenüber beiden Blendkomponenten erhöhten Glasübergangstemperatur des Blends sowie einer Entmischung der Blendkomponenten in Abhängigkelt von der Zusammensetzung des Blends.

Die HU 032 854 A beschreibt einen thermoplastischen Polymer-Blend aus einem Polystyrol und Polybutien enthaltenden Blockpolymer mit modifiziertem Lignin. Durch den Einsatz von Lignin läßt sich der zur Herstellung des Polymer-Blends erforderliche Energlebedarf um 10 bis 15 % absenken.

Die WO 98/13424 A1 betrifft ein Verfahren zur Herstellung eines Polymer-Blends aus thermoplastischen Polymeren und Lignin sowie einen solchen Polymer-Blend, indem zur Verhinderung einer thermischen Beeinträchtigung des Lignins zunächst die thermoplastischen Polymere geschmolzen und der Schmelze das Lignin zugesetzt wird. Das Verfahren dient zur Herstellung von Materialien mit an den jeweiligen Einsatzzweck angepaßten physikalischen, mechanischen und thermischen Eigenschaften, wobei z. B. Türen, Zwischenwände, Innenverkleidungstelle für Kraftfahrzeuge, Möbel und Verpakkungsbehälter erwähnt sind. Als thermoplastische Polymere kommen vornehmlich die synthetischen Polymere Polypropylen, Polyethylen, Polyvinylchlorid und Polystyrol in Frage.

Die JP 59-210 959 A beschreibt eine Zusammensetzung aus 100 Teilen eines 1-Chlorbutadien-Butadien-Copolymers, 10-150 Teilen Lignin und 5-40 Teilen OH-Gruppen aufweisenden Kautschuken, die mit einer Vielzahl von Verbindungen mit wenigstens zwei funktionellen Gruppen, wie Isocyanat-, Amin-, Nitrilgruppen oder dergleichen vulkanisiert bzw. vernetzt sind. Der vernetzten Zusammensetzung verleiht des Lignin eine erhöhte Festigkeit.

Der SU 177 54 43 A1 ist eine elastische Zusammensetzung entnehmbar, die Ligninpulver, Wasserglas und Butadien-Styrol-Latex enthält. Durch den Zusatz von Lignin wird die Festigkeit der vulkanisierten Zusammensetzung erhöht und deren Verarbeitbarkelt verbessert.

Während aus der DE 197 29 268 A1 ein biologisch abbaubarer Polymer-Blend aus Lignin und weiteren natürlichen Polymeren, Insbesondere Stärke, bekannt ist, beschreibt die EP 0 934 976 einen thermoplastischen Compound auf der Basis von Hydroxycarbonsäuren mit Füll- oder Faserstoffen, beispielsweise Lignin.

Der Erfindung liegt die Aufgabe zugrunde, einem Kunststoff-Werkstoff auf der Basis von Lignin, welcher sich durch gute Werkstoffeigenschaften auszeichnet und eine günstige CO₂-Bilanz aufweist, neue Anwendungsgebiete zu erschließen.

Erfindungsgemäß wird diese Aufgabe durch die Verwendung eines Kunststoff-Werkstoffs zur Herstellung von Gehäusen, vorzugsweise für elektronische Gehäuse, aus einem Polymer-Blend gelöst, bestehend aus:
- wenigstens einem natürlichen Polymer auf der Basis von Lignin; und
- wenigstens einem die Schlagzähigkeit erhöhenden synthetischen Polymer, ausgewählt aus der Gruppe Polyethylen, Polypropylen, Polystyrol, Polybutadien und Weichmacher enthaltendem Polyvinylchlorid; und
- natürlichen Verstärkungsfasern; und
- gegebenenfalls synthetischen Verstärkungsfasern; und
- gegebenenfalls partikulärem Chitin.

Durch den Ausschluß von Proteinen ist der Kunststoff-Werkstoff dauerhaft und weitgehend geruchsneutral.

Insbesondere ist vorgeshen, daß zur Herstellung von Gehäusen aus dem Polymer-Blend aufgrund seiner hohen Verfügbarkeit Alkali-Lignin als Pulver, wie es bei der Aufarbeitung von Abwässern aus der Celluloseverarbeitung durch Verdampfen erhalten wird, oder z. B. in in Alkoholen, wie Glykol, gelöster Form eingesetzt wird.

Als synthetische Polymerkomponenten zur Erhöhung der Schlagzähigkeit kommen die genannten synthetischen Thermoplaste mit einer höheren Schlagzähigkeit als Lignin, nämlich Polyethylene oder Polypropylene, oder thermoplastische Elastomere (Thermoelaste) in Form von Polystyrol oder Polybutadien in Frage. Die synthetischen Polymere können auch Zusatzstoffe, wie Weichmacher (Phthalate, Adipate oder Alkylphosphate), enthalten, so daß selbst harte synthetische Polymere, wie PVC, eingesetzt werden können.

Die Herstellung des Blends kann auf bekannte Weise im schmelzflüssigen Zustand erfolgen, wobei Temperaturen oberhalb 200°C vermieden werden müssen, um insbesondere die natürlichen Polymere nicht zu schädigen. Nur durch diese Temperaturgrenze wird die Auswahl der die Schlagzählgkeit erhöhenden Polymere beschränkt. Die Herstellung kann z. B. mittels Extrudern erfolgen, wobei die Polymerkomponenten entweder aus separaten Dosiersystemen getrennt aufgegeben oder ein synthetisches Polymer oder ein Polymer-Blend vorgelegt und das Lignin zugesetzt werden kann. Der Kunststoff-Werkstoff zeichnet sich vor allem durch andere Werkstoffeigenschaften gegenüber vielen rein synthetischen Kunststoffen und Kunststoffmischungen, wie auch gegenüber bekannten, natürliche Polymere enthaltenden Kunststoffen aus. Insbesondere weist der Kunststoff-Werkstoff eine hohe UV-Beständigkeit, eine hohe Festigkeit, eine hohe Steifigkeit und eine hohe Schlagzähigkeit auf. Während die erhöhte Festigkeit, die erhöhte Schlagzähigkeit und die im Vergleich zu reinem Lignin bessere Verarbeitbarkeit durch die jeweilige synthetische Polymerkomponente hervorgerufen wird, erhält der Werkstoff seine hohe Steifigkeit, seine wärme- und schallisolierenden Eigenschaften und seine hohe UV-Beständigkalt aufgrund des Ligninanteils, weshalb beispielsweise auf den Zusatz von Antioxidantien weitgehend verzichtetwerden kann. Der Ligninanteil verleiht dem Werkstoff weiterhin einen für viele Verwendungszwecke erwünschten holzähnlichen Charakter.

In bevorzugter Ausführung beträgt der Ugninanteil des Kunststoff-Werkstoffs 2 bis 90 Mass.-%, insbesondere 5 bis 65 Mass.-%. Durch Variation des Ugninanteils lassen sich die Wertstoffeigenschaften verändern und an den jeweiligen Verwendungszweck anpassen, wobei die weitgehend ökologisch neutrale CO₂-Bilanz und die biologische Abbaubarkeit bzw. Verrottbarkeit mit steigendem Anteil des Lignins zunimmt.

Der Kunststoff-Werkstoff kann neben den natürlichen Verstärkungsfasern (z.B. Flachs-, Sisal-, Cellulose-, Holz-, Miscanthus- oder Hanffasern) weiterhin synthetische Verstärkungsfasem (z.B. Glas-, Polyamid-, Aramid- oder Kohlefasern) enthalten, welche dem Werkstoff eine noch höhere Zugfestigkeit verleihen. Aufgrund einer neutralen CO₂-Bilanz ist die Verwendung natürlicher Verstärkungsfasern und aufgrund der hohen Zugfestigkeit insbesondere die Verwendung von Hanffasern bevorzugt, welche z. B. während des Mischens der Polymerkomponenten direkt einem Extruder zugesetzt werden können.

Eine noch höhere Zugfestigkeit läßt sich zusätzlich dadurch erzielen, daß dem Kunststoff-Werkstoff partikuläres, z. B. gemahlenes Chitin zugesetzt wird.

Wie bereits erwähnt, ist der Kunststoff-Werkstoff für Gehäuse unterschiedlicher Art geeignet. Er bietet sich aufgrund seines Eigenschaftsspektrum, seiner Farbe und seiner Konsistenz als Ersatz für Holz- oder Holzwerkstoffe an. Er kann beispielsweise auch lackiert oder furniert sein. Im letztgenannten Fall sorgt der Ugninanteil des Kunststoff-Werkstoffs für eine hohe Affinität zu einem Holzfurnier.

Nachfolgend ist die Erfindung anhand eines Ausführungsbeispiels näher erläutert.

### Ausführungsbeispiel:

Es wird eine Mischung aus 30% pulverförmigem Lignin, 20% pulverförmigem Polyethylen und 50% Hanffasern bei 170°C verarbeitet und im Spritzgießverfahren bei 1500 bar ausgeformt. Der spritzgegossene Formkörper weist gegenüber einem reinen Lignin-Fa-ser-Compound eine erhöhte Schlagzähigkeit und gegenüber reinen Polyethylenformteilen eine erhöhte UV-Stabilität auf. Die Schlagzähigkeit erhöht sich von 2 bis 5 kJ/m² auf 5 bis 30 kJ/m². Zugleich sinkt zwar die Steifigkeit gegenüber reinen Lignin-Compounds von ca. 4000 bis 7000 N/mm² auf ca. 2000 bis 4000 N/mm², doch reicht diese Steifigkeit für viele technische Anwendungen, insbesondere für Gehäuse, aus.

## Patentansprüche

1. Verwendung eines Kunststoff-Werkstoffs aus einem Polymer-Blend, bestehend aus
- wenigstens einem natürlichen Polymer auf der Basis von Lignin; und
- wenigstens einem die Schlagzähigkeit erhöhenden synthetischen Polymer, ausgewählt aus der Gruppe Polyethylen, Polypropylen, Polystyrol, Polybutadien und Weichmacher enthaltendem Polyvinylchlorid; und
- natürlichen Verstärkungsfasern; und
- gegebenenfalls synthetischen Verstärkungsfasern;
und
- gegebenenfalls partikulärem Chitin
zur Herstellung von Gehäusen.

2. Verwendung eines Werkstoffs nach Anspruch 1 zur Herstellung von Gehäusen für elektrische oder elektronische Geräte.

3. Verwendung eines Werkstoffs nach Anspruch 1 oder 2, **dadurch gekennzeichnet, daß** das Lignin Alkali-Lignin ist.

4. Verwendung eines Werkstoffs nach einem der Ansprüche 1 bis 3, **dadurch gekennzeichnet, daß** der Ligninanteil des Polymer-Blends 2 bis 90 Mass.-%, insbesondere 5 bis 65 Mass.-%, beträgt.

## Claims

1. Use of a plastics material made from a polymer blend, comprising
- at least one natural polymer based on lignin; and
- at least one synthetic polymer which increases impact strength, selected from the group of polyethylene, polypropylene, polystyrene, polybutadiene, and plasticized polyvinyl chloride; and
- natural reinforcing fibres; and
- optionally synthetic reinforcing fibres; and
- optionally particulate chitin
in order to produce housings.

2. Use of a material according to claim 1 for producing housings for electrical or electronic appliances.

3. Use of a material according to claim 1 or 2, **characterised in that** the lignin is alkali lignin.

4. Use of a material according to one of claims 1 to 3, **characterised in that** the lignin content of the polymer blend is 2 to 90 % by mass, especially 5 to 65 % by mass.

## Revendications

1. Utilisation d'une matière plastique constituée d'un mélange de polymères, composé de :
- au moins un polymère naturel à base de lignine ; et
- au moins un polymère synthétique à résilience accrue, sélectionné dans le groupe polyéthylène, polypropylène, polystyrène, polybutadiène et plastifiant contenant du chlorure de polyvinyle ; et
- des fibres de renforcement naturelles ; et
- le cas échéant des fibres de renforcement synthétiques ; et
- le cas échéant de la chitine sous forme particulaire
pour la fabrication de boîtiers.

2. Utilisation d'une matière selon la revendication 1, pour la fabrication de boîtiers pour appareils électriques ou électroniques.

3. Utilisation d'une matière selon la revendication 1 ou 2, **caractérisée en ce que** la lignine est de la lignine alcaline.

4. Utilisation d'une matière selon l'une quelconque des revendications 1 à 3, **caractérisée en ce que** la teneur en lignine du mélange de polymères est de 2 à 90 % en masse, notamment de 5 à 65 % en masse.
